# EUROPEAN PATENT APPLICATION

(11) **EP 1 544 860 A2**
(43) Date of publication of application: **22.06.2005**
(21) Application number: 04026301.4
(22) Date of filing: 05.11.2004
(51) Int. Cl.: G11B 19/20, G11B 19/24, G11B 19/28

(54) **Electronic device having driving device for rotating recording medium, and driving method for driving device**

(30) Priority: 16.12.2003 JP 2003417648
(71) Applicant: Kabushiki Kaisha Toshiba, Tokyo 105-8001 (JP)
(72) Inventor: Kumagai, Akira Toshiba Corporation, Tokyo 105-8001 (JP)
(74) Representative: Henkel, Feiler & Hänzel

(57) **Abstract**

According to this invention, a CPU (101) executes a control program (201) to perform medium determination including the type of contents of a medium loaded in a disk device (108). The CPU (101) controls the rotational speed of the disk device (108) to one optimal for the loaded medium in accordance with the determined type of medium.

## Description

The present invention relates to an electronic device having a driving device for rotating a recording medium, and a driving method for the driving device.

There has conventionally been proposed a disk device capable of selecting a quick mode in which seek and data read/write are performed at a high speed and a silent mode in which seek and data read/write are performed at a low speed with low power consumption and little noise, as disclosed in, e.g., Jpn. Pat. Appln. KOKAI Publication No. 2003-263849. However, the conventional disk device is not always convenient because it is not equipped with a mechanism which controls the rotational speed of a driving device such as a disk device in accordance with an arbitrary medium (e.g., data CD, music CD, or DVD-ROM) used by the user. Recently, the driving device processes many types of rotating recording media and contents. In this situation, demands have arisen for a driving device capable of always driving a rotating recording medium at an optimal driving speed in accordance with the type of target rotating recording medium and the type of contents recorded on the rotating recording medium.

The present invention has been made to overcome the conventional drawbacks, and has as its object to provide an electronic device having a rotating recording medium driving device capable of always driving a rotating recording medium at an optimal driving speed in accordance with the type of target rotating recording medium and the type of contents recorded on the rotating recording medium, a driving method for the driving device, and a program applied to a computer which accesses the rotating recording medium.

According to the present invention, an electronic device comprises a driving device which has a loading mechanism for a rotating recording medium and can control a rotational speed of the rotating recording medium loaded in the loading mechanism, and control means for controlling the rotational speed of the driving device on the basis of a determined type of information by determining a type of information recorded on the rotating recording medium.

Further, in the present invention, a driving method applied to a driving device which comprises a loading mechanism for a rotating recording medium and rotates the rotating recording medium loaded in the loading mechanism comprises determining a type of information recorded on the rotating recording medium, and controlling a rotational speed of the driving device on the basis of the determined type of information.

Also, in the present invention, a program causes a computer which accesses a rotating recording medium, to implement a function of accessing the rotating recording medium to determine a type of information recorded on the rotating recording medium, and a function of controlling a rotational speed of the rotating recording medium on the basis of the determined type of information.

In this way, the rotating recording medium can always be driven and controlled at an optimal rotational speed in accordance with the type of target rotating recording medium and the type of contents recorded on the rotating recording medium.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an example of the arrangement of an electronic device according to an embodiment of the present invention;
FIG. 2 is a table showing an example of the structure of a data table according to the embodiment of the present invention;
FIG. 3 is a flowchart showing an example of the process sequence of a control program for a driving device upon rotational speed setting according to the embodiment of the present invention;
FIG. 4 is a flowchart showing another example of the process sequence of the control program for the driving device upon user operation according to the embodiment of the present invention; and
FIG. 5 is a table showing an example of the structure of a driving operation table according to the embodiment of the present invention.

A preferred embodiment of the present invention will be described below with reference to the several views of the accompanying drawing.

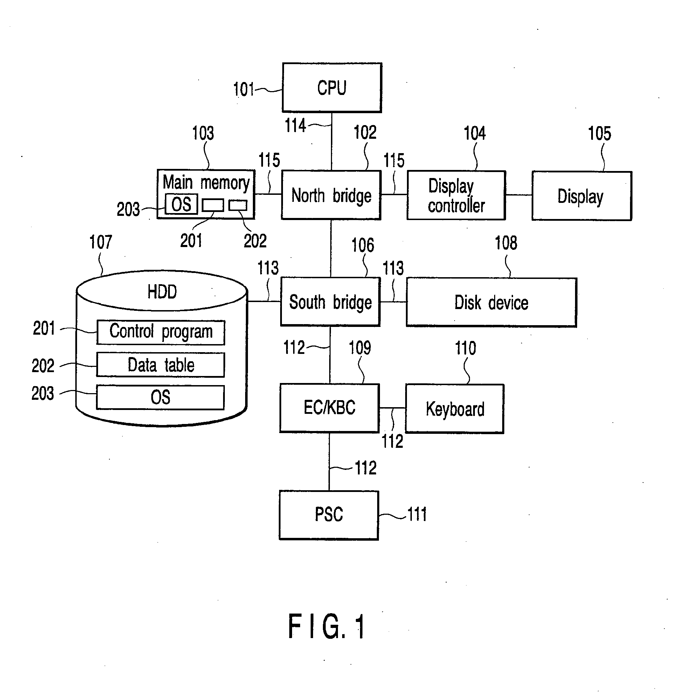

FIG. 1 shows the arrangement of an electronic device according to the embodiment of the present invention. The electronic device is, for example, a personal computer, and its building components are illustrated.

The computer according to the embodiment comprises a CPU 101, a north bridge 102, a main memory 103, a display controller 104, a display 105, a south bridge 106, a hard disk drive (HDD) 107, a disk device 108 serving as a driving device capable of controlling the rotational speed of a disk, an embedded controller/keyboard controller (EC/KBC) 109, a keyboard 110, and a power controller (PSC) 111.

As information associated with processes of the embodiment, the HDD 107 stores a control program 201 for controlling to optimally drive to rotate a disk in accordance with the type of disk serving as a rotating recording medium loaded in the disk loading mechanism of the disk device 108 and the type of contents recorded on the disk, a data table 202 which is looked up by the control program 201 and makes the type of contents and the rotational speed of the disk correspond to each other, and an operating system (OS) 203 for controlling the computer.

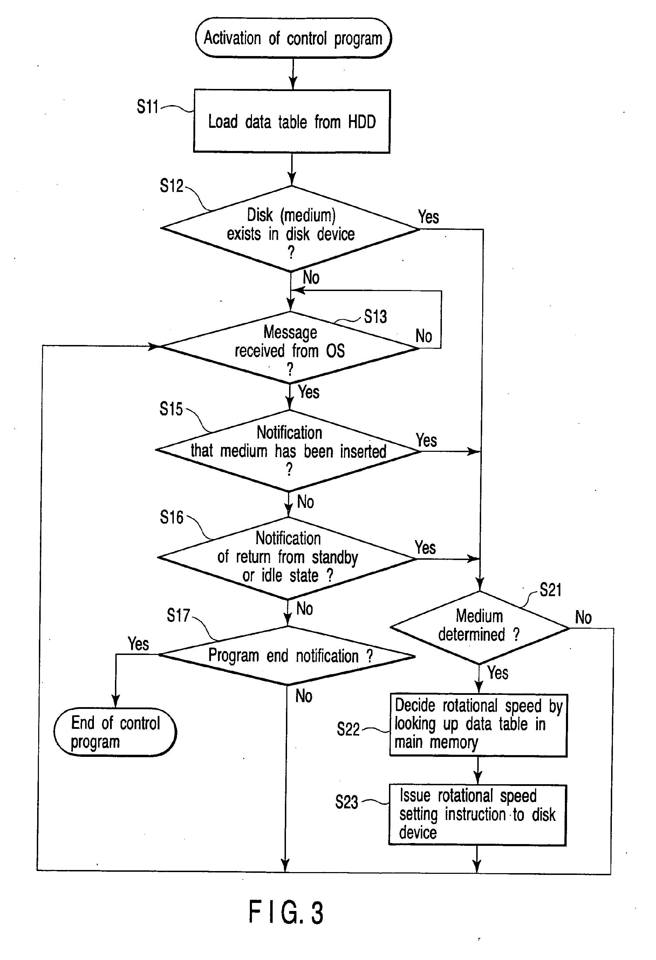

The CPU 101 is a processor adopted to control the operation of the computer. The CPU 101 executes the OS 203 and various application programs which are loaded from the HDD 107 to the main memory 103. The control program 201 stored in the HDD 107 is also loaded to the main memory 103 together with the data table 202, and executed by the CPU 101. The process of the control program 201 in this case will be described later with reference to the flowchart shown in FIG. 3. The CPU 101 also executes a BIOS stored in a BIOS-ROM (not shown).

The north bridge 102 is a bridge device which connects a local bus 114 of the CPU 101 and, e.g., a PCI bus 115 in two ways. The north bridge 102 incorporates a memory controller (not shown) which controls access to the main memory 103, and an interface (not shown) for the display controller 104.

The display controller 104 controls the display 105 which adopts, e.g., an LCD and is used as the display monitor of the computer.

The south bridge 106 is a bridge device which connects a PCI bus 113 and, e.g., an ISA bus 112 in two ways. The south bridge 106 controls devices on the PCI bus 113 and devices on the ISA bus 112. The disk device 108 capable of controlling the rotational speed of the disk is also controlled by the south bridge 106. The ISA bus 112 is connected to the keyboard 110, PSC 111, and the like via the EC/KBC 109. The south bridge 106 also incorporates an IDE controller (not shown) for controlling the HDD 107.

The HDD 107 stores the control program 201, and the data table 202 which is looked up by the control program 201. The control program 201 and data table 202 are loaded to the main memory 103 upon activation of the system, and executed by the CPU 101.

The disk device 108 capable of controlling the rotational speed of the disk processes disks serving as rotating recording media which record various contents, such as a music CD, a data CD-R, and a DVD which records moving pictures. The disk device 108 comprises a disk loading mechanism. The disk device 108 drives and controls a disk at an optimal rotational speed under the control of the control program 201 in accordance with the type of disk loaded into the loading mechanism and the type of contents recorded on the disk. The disk device 108 accesses all or some of, e.g., a CD-ROM, CD-R, CD-RW, DVD-ROM, DVD-R, DVD-RW, DVD+R, DVD+RW, and DVD-RAM, and executes a read/write process for recording and playing back various pieces of information. In the embodiment, when the disk is a music CD, the disk which records music data is driven to rotate at a low speed of x4 under the control of the control program 201. When the disk is a data CD-R, the disk is driven to rotate at the highest speed (maximum speed) to realize high-speed data access.

The EC/KBC 109 is a 1-chip microcomputer in an embedded controller for managing power in cooperation with the PSC 111 and a keyboard controller for controlling the keyboard 110 are integrated.

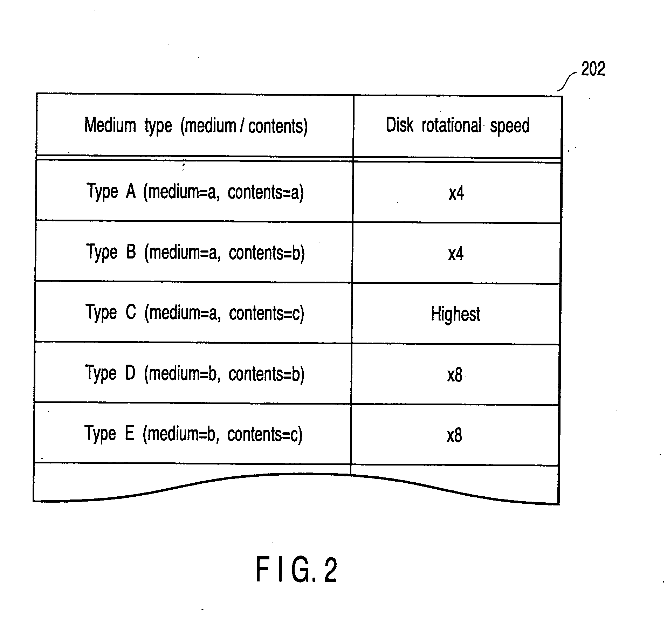

FIG. 2 shows an example of the structure of the data table 202 which is looked up by the control program 201. The data table 202 shown in FIG. 2 defines the rotational speed of the disk for each type of medium and each type of contents in a medium type determination process. The table may define the rotational speed of the disk for each type of contents. The data table 202 is stored in the HDD 107 together with the control program 201. When the control program 201 is loaded to the main memory 103 and executed by the CPU 101, the data table 202 is loaded to the main memory 103 under the control of the control program 201, and used for rotational speed control of the control program 201.

FIG. 3 shows the process sequence of the control program 201 which is loaded from the HDD 107 to the main memory 103 and executed by the CPU 101.

The process shown in FIG. 3 is executed upon system activation of the OS 203 or upon return from a standby state or idle state. Upon activation of the OS 203, the control program 201 stored in the HDD 107 is loaded to the main memory 103 and executed by the CPU 101.

In the process of the control program 201, the data table 202 stored in the hard disk of the HDD 107 is loaded to the main memory 103 (step S11). The data table 202 defines the rotational speed of the disk for each type of medium and can be changed. The rotational speed of the disk is defined for each medium such that the rotational speed is x4 for a music CD and the highest speed for a data CD-R.

After the data table 202 is loaded to the main memory 103, whether a disk (medium) has been set in the disk device 108 is determined (step S12).

If no disk (medium) exists (has not been loaded) (NO in step S12), the flow waits for a message from the OS 203 (step S13).

If a message is received from the OS 203 (YES in step S13), whether the message is a notification that the disk (medium) has been inserted into the disk device 108 is determined (step S15).

If the message is not a notification that the disk (medium) has been inserted (NO in step S15), whether the message is a notification of return from the standby or idle state is determined (step S16). If the message is not a return notification (NO in step S16), whether the message is a program end notification is determined (step S17).

If the message is a program end notification (YES in step S17), the program end process is performed. If the message is not an end notification (NO in step S17), the flow waits for the next message from the OS 203 without any process (step S13).

If the disk (medium) is determined in step S12 to have been set (YES in step S12), data of the medium is loaded to determine the type of medium and the type of contents. If determination is successful (YES in step S21), the disk rotational speed of the disk device 108 is determined by looking up the data table 202 in the main memory 103 in accordance with the type (information type) specified by the determination result (step S22). A rotational speed setting instruction based on the determination is issued to the disk device 108 (step S23). The rotational speed setting instruction to the disk device 108 generally uses an ASPI (Advanced SCSI Programming Interface) SET CD SPEED command.

If the message is in step S15 a notification that the disk (medium) has been inserted (YES in step S15), processes in step S21 and subsequent steps are done.

If the message is in step S16 a notification of return from the standby or idle state (YES in step S16), processes in step S21 and subsequent steps are done.

If the medium cannot be determined in step S21 owing to a failure in loading data of the medium (NO in step S21), no medium is determined to exist, and the flow shifts to step S13 and waits for the next message from the OS 203.

In this manner, the disk (medium) rotational speed of the disk device 108 is controlled to a rotational speed optimal for the medium in accordance with determination of the type of medium containing the type of contents of the medium loaded in the disk device 108. A music CD, DVD-Video, and the like can be enjoyed in a silent mode while rotational noise of the disk device 108 is suppressed small. Also, data can be read/written from/in a data CD and the like in a high-speed access mode.

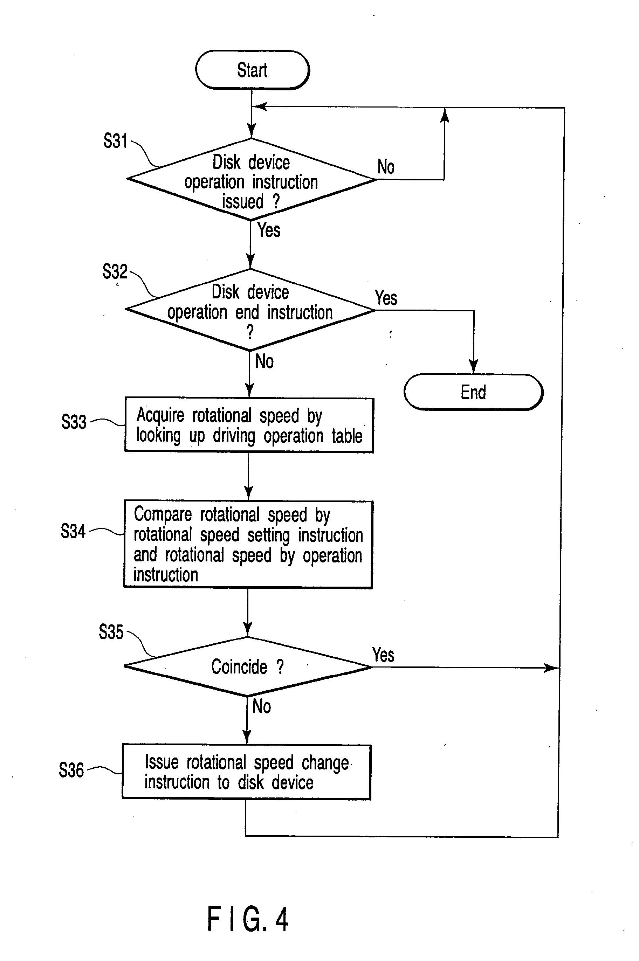

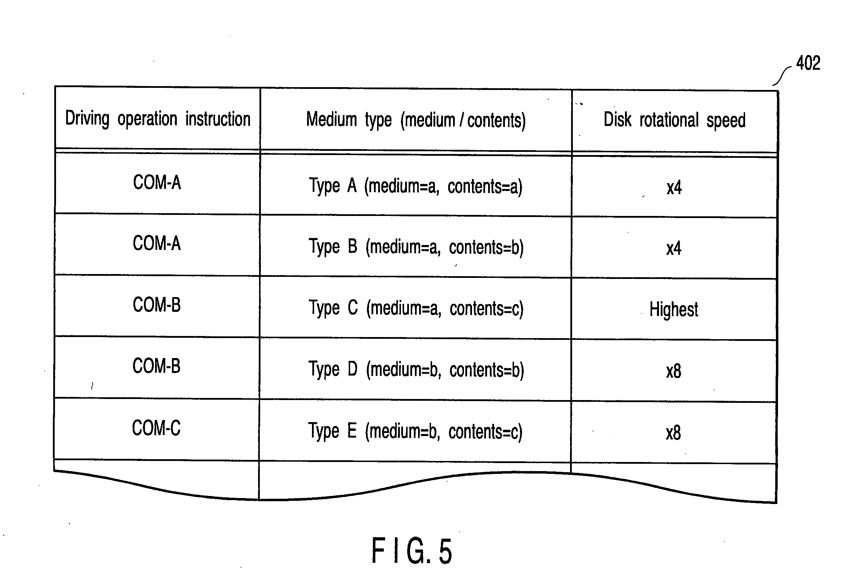

Process operation of the control program 201 when the OS 203 issues an instruction upon various user operations to the disk device 108 while the disk device 108 accesses a medium at a rotational speed complying with the rotational speed setting instruction will be explained with reference to FIG. 4. FIG. 4 shows the process sequence of disk rotation control in accordance with a disk driving operation instruction executed by the control program 201. FIG. 5 shows an example of the structure of a driving operation table 402 which is looked up by this process. Although not shown in FIG. 1, the driving operation table 402 is stored in the HDD 107 and loaded to the main memory 103 by the control program 201, similar to the data table 202.

If a disk device operation instruction is issued by user operation while the disk device 108 accesses a medium at a rotational speed complying with the rotational speed setting instruction issued in step S23 (YES in step S31), whether the instruction is one to end the operation of the disk device is determined (step S32). If the instruction is one to end the operation of the disk device (YES in step S32), the disk device 108 is instructed to end the operation, and the control program 201 ends.

If the disk device operation instruction is an instruction of another operation such as picture search or playback (NO in step S32), the rotational speed of the disk in executing the operation instruction is acquired by looking up the driving operation table 402 shown in FIG. 5 (step S33).

The acquired disk rotational speed and a disk rotational speed complying with the currently executed rotational speed setting instruction are compared (step S34). If these rotational speeds coincide with each other (YES in step S35), the flow returns to the process in step S31 while continuing driving control based on the disk rotational speed complying with the currently executed rotational speed setting instruction. If these rotational speeds do not coincide with each other (NO in step S35), a rotational speed setting instruction (SET CD SPEED command) is so issued as to set a disk rotational speed complying with the operation instruction (step S36).

In the above-described embodiment, the rotational speed of a medium loaded in the disk device 108 is selected by looking up the data table 202 or driving operation table 402. A rotational speed instruction can also be issued using the internal parameters of the control program 201 without preparing the data table 202 and driving operation table 402.

## Claims

1. An electronic device **characterized by** comprising:
a driving device (108) which comprises a loading mechanism for a rotating recording medium and can control a rotational speed of the rotating recording medium loaded in the loading mechanism; and
a control device (101) which controls the rotational speed of the driving device (108) on the basis of a determined type of information by determining a type of information recorded on the rotating recording medium.

2. A device according to claim 1, **characterized in that** the control device (101) determines the type of information recorded on the rotating recording medium upon initial operation, upon return from a standby state, or upon return from an idle state, and controls the rotational speed of the driving device (108) on the basis of the determined type of information.

3. A device according to claim 2, **characterized in that** the control device (101) determines, from a content of the information recorded on the rotating recording medium, whether the type of information is information accompanied by playback of an audible sound, and when the type of information is determined to be information accompanied by playback of an audible sound, drives to rotate the driving device (108) at a predetermined low speed.

4. A device according to claim 2, **characterized in that** the control device (101) determines, from a content of the information recorded on the rotating recording medium, whether the type of information is information accompanied by transfer of a large amount of data, and when the type of information is determined to be information accompanied by transfer of a large amount of data, drives to rotate the driving device (108) at a predetermined highest speed.

5. A device according to claim 2, **characterized in that** the control device (101) comprises a table (202) which makes the type of recorded information for a rotating recording medium loadable in the loading mechanism of the driving device (108) and the rotational speed of the driving device correspond to each other, and controls the rotational speed of the driving device (108) in accordance with the determined type of information by looking up the table (202).

6. A device according to claim 2, **characterized in that** the control device (101) determines, prior to determination of the type of information, whether the rotating recording medium has been loaded in the loading mechanism of the driving device (108), and when the rotating recording medium is determined to have been loaded, loads data from the rotating recording medium and determines the type of information from a content of the data.

7. A device according to claim 6, **characterized in that** the control device (101) further comprises a table (202) which makes the rotational speed of the driving device (108) and a type of information recorded on the rotating recording medium loadable in the loading mechanism of the driving device (108) correspond to each other, and the control device (101) determines the rotational speed of the driving device (108) in accordance with the determined type of information by looking up the table (202) and controls the rotational speed of the driving device (108) in accordance with the determined rotational speed.

8. A driving method applied to a driving device (108) which comprises a loading mechanism for a rotating recording medium and rotates the rotating recording medium loaded in the loading mechanism, **characterized by** comprising:
determining a type of information recorded on the rotating recording medium; and
determining a rotational speed of the driving device (108) on the basis of the determined type of information.

9. A method according to claim 8, **characterized in that** the type of information is determined upon initial operation of the driving device (108), upon return from a standby state, or upon return from an idle state.

10. A method according to claim 9, **characterized in that**
in determining the type of information, whether the type of information is information accompanied by playback of an audible sound is determined from a content of the information recorded on the rotating recording medium, and
in determining the rotational speed, when the type of information is determined to be information accompanied by playback of an audible sound, the rotational speed of the driving device is determined to a predetermined low speed.

11. A method according to claim 9, **characterized in that**
in determining the type of information, whether the type of information is information accompanied by transfer of a large amount of data is determined from a content of the information recorded on the rotating recording medium, and
in determining the rotational speed, when the type of information is determined to be information accompanied by transfer of a large amount of data, the rotational speed of the driving device (108) is determined to a predetermined highest speed.

12. A method according to claim 9, **characterized in that** in determining the rotational speed, the rotational speed of the driving device (108) is determined in accordance with the determined type of information by looking up a predetermined table (202) which makes the type of recorded information for a rotating recording medium loadable in the loading mechanism of the driving device (108) and the rotational speed of the driving device (108) correspond to each other.

13. A method according to claim 9, which further comprises determining, prior to determination of the type of information, whether the rotating recording medium has been loaded in the loading mechanism of the driving device (108), and in which in determining the type of information, when the rotating recording medium is determined to have been loaded, data is loaded from the rotating recording medium to determine from a content of the data the type of information recorded on the rotating recording medium.

14. A method according to claim 13, **characterized in that** in controlling the rotational speed, the rotational speed of the driving device (108) is determined from the determined type of information by looking up a predetermined table (202) which makes the rotational speed of the driving device (108) and a type of information recorded on the rotating recording medium loadable in the loading mechanism of the driving device (108) correspond to each other.

15. A program causing a computer which accesses a rotating recording medium, to implement
accessing the rotating recording medium to determine a type of information recorded on the rotating recording medium, and
controlling a rotational speed of the rotating recording medium on the basis of the determined type of information.

16. A program according to claim 15, **characterized in that** the timing when the rotating recording medium is accessed is a timing upon initial operation, a timing upon return from a standby state, or a timing upon return from an idle state.

17. A program according to claim 15, **characterized in that** in controlling the rotational speed, whether the determined type of information is information accompanied by playback of an audible sound is determined, and when the type of information is determined to be information accompanied by playback of an audible sound, the rotational speed of the rotating recording medium is controlled at a predetermined low speed.

18. A program according to claim 15, **characterized in that** in controlling the rotational speed, whether the determined type of information is information accompanied by transfer of a large amount of data is determined, and when the type of information is determined to be information accompanied by transfer of a large amount of data, the rotational speed of the rotating recording medium is controlled at a predetermined highest speed.

19. A program causing a computer which accesses a rotating recording medium loaded in a loading mechanism of a driving device (108), to implement
determining whether the rotating recording medium has been loaded in the loading mechanism of the driving device (108),
when the rotating recording medium is determined to have been loaded, loading data from the rotating recording medium to determine from a content of the data a type of information recorded on the rotating recording medium,
determining a rotational speed of the driving device on the basis of the determined type of information, and
controlling the rotational speed of the driving device (108) in accordance with the determined rotational speed.

20. A program according to claim 19, **characterized in that** in determining the rotational speed, the rotational speed of the driving device (108) is determined in accordance with the determined type of information by looking up a predetermined table (202) which makes the type of recorded information for a rotating recording medium loadable in the loading mechanism of the driving device (108) and the rotational speed of the driving device (108) correspond to each other.
